**Europäisches Patentamt**

**European Patent Office**

**Office européen des brevets**

(11) Numéro de publication: **0 011 525**
**B1**

(12) **FASCICULE DE BREVET EUROPEEN**

(45) Date de publication du fascicule de brevet: **16.09.81**

(21) Numéro de dépôt: **79400739.3**

(22) Date de dépôt: **12.10.79**

(51) Int. Cl.³: **A 01 M 29/00,**
**E 04 D 13/00**

(54) **Dispositif pour empêcher les volatiles de se poser sur les bâtiments.**

(30) Priorité: **20.11.78 FR 7832679**

(43) Date de publication de la demande:
**28.05.80 Bulletin 80/11**

(45) Mention de la délivrance du brevet:
**16.09.81 Bulletin 81/37**

(84) Etats Contractants Désignés:
**AT BE CH DE GB IT LU NL SE**

(56) Documents cités:
**DE - A - 1 757 735**
**US - A - 2 306 080**

(73) Titulaire: **Assouline, David**
**103, avenue Philippe Auguste**
**F-75011 Paris (FR)**

(72) Inventeur: **Assouline, David**
**103, avenue Philippe Auguste**
**F-75011 Paris (FR)**

(74) Mandataire: **Cuer, André**
**CABINET CUER 30, rue de Léningrad**
**F-75008 Paris (FR)**

Courier Press, Leamington Spa, England.

# Dispositif pour empêcher les volatiles de se poser sur les bâtiments

La présente invention a trait au domaine des systèmes de répulsion des volatiles tels que oiseaux, pigeons ou analogues et concerne tout spécialement un dispositif permettant à la fois d'éloigner les volatiles et de les empêcher de se poser et de nicher sur les toits, corniches des bâtiments, édifices ou parties de constructions telles que rebords de fenêtres ou analogues.

On connait le danger et les coûts entraînés par la présence d'un très grand nombre d'oiseaux, en particulier des pigeons domestiques, dans les grandes agglomérations. Outre les affections, notamment virales, transmises à l'homme par voie aérienne, les pigeons domestiques provoquent par leurs excréments de sérieuses dégradations des bâtiments, voitures, chaussées, etc. Par ailleurs, les cris et gloussements de ces volatiles nuisent grandement à la tranquillité des citadins.

Pour pallier ces inconvénients, divers types de procédés ou systèmes sont commercialisés ou ont été préconisés.

Conformément à un premier groupe de techniques, on cherche à éloigner les pigeons en déposant un produit répulsif, de type glu, sur toutes les saillies fréquentées par les volatiles. Ce procédé présente de nombreux inconvénients inhérents tant au produit utilisé (fusion et coulées par temps chaud, gel par temps froid, attraction de la poussière et des pollutions, faible durée d'utilisation) qu'aux dificultés et danger de mise en place pour les ouvriers et service d'entretien.

Selon un autre groupe de systèmes, on a préconisé la mise en place, sur tous les éléments habituellement fréquentés par les pigeons, de divers dispositifs destinés à empêcher la pose de ces derniers, tels que par exemple: des rampes ou bandes d'éléments triangulaires à pointe en haut, pliés en accordéon; des plaques verticales triangulaires rapprochées, à pointes effilées, dans le même plan ou divergentes; des supports munis de dents pointues en matière plastique etc. (voir par exemple brevet américain N° 2.306.080 du 7/01/1942. J.S. PELES). Si de tels systèmes peuvent être efficaces, au moins pour certains, dans le but de provoquer le déséquilibre des oiseaux ou pigeons, ils ne constituent pas une panacée; en effet, l'expérience montre que les volatiles ne sont apparemment pas effrayés par de tels dispositifs à pointes acérées et évitent la difficulté en se posant à proximité immédiate de ceux-ci.

Il a maintenant été trouvé, après de nombreuses séries d'essais systématiques, que pour écarter totalement et définitivement les pigeons et autres volatiles des bâtiments, édifices publics ou autres constructions, il ne suffisait pas de prévoir la mise en place de dispositifs "anti-perchoirs" mais qu'il fallait en outre trouver un moyen permettant d'effrayer les volatiles à distance.

Pour atteindre ce but, non encore visé dans l'état antérieur de la technique connue, et résoudre le double problème susmentionné, l'invention propose un moyen physique ou mécanique du type éléments modulaires, à volumes veticaux se rétrécissant vers le haut dont la pose est rapide et facile sur toutes les surfaces fréquentées par les volatiles et de bonne tenue au vieillissement et aux intempéries.

Le dispositif selon l'invention est essentiellement caractérisé en ce que chaque élément modulaire est constitué par un polyèdre à faces latérales déviant la lumière et concourant en un sommet sous forme de pointe effilée.

Ainsi, contrairement aux lames, pointes, tiges acérées ou autres systèmes préconisés jusqu'ici, le nouveau dispositif remplit la double fonction recherchée en interdisant la pose du volatile et an provoquant sur ce dernier un effet de dissuasion grâce au phénomène optique, notamment par réflexion et/ou réfraction, généré par l'orientation des faces et la matière, transparente ou non, utilisée pour la réalisation des polyèdres ou de l'ensemble du dispositif.

Conformément à une réalisation préférée, les faces latérales concourant au sommet de chaque polyèdre font un angle inférieur à 90 degrés par rapport à l'horizontale et la distance entre les parties les plus proches de deux bases de polyèdres adjacents sur le socle est avantageusement inférieure ou égale à 3 centimétres.

En pratique, le volume d'un polyèdre peut être plein ou creux et sa forme peut être variée pourvu que les conditions relatives aux angles, distances et sommets effilés, telles que résumées ce-dessus, soient respectées. Par exemple, à titre non limitatif, le polyèdre peut être un cône, une pyramide, un polygone ou un quadrilatère quelconque (par exemple de type rectangulaire) surmonté d'une pyramide.

D'autres caractéristiques encore apparaitront au cours de la description qui suit, relative à un mode de réalisation non limitatif, illustré par les dessins de la planche annexée où l'on peut voir schématiquement:

Figure 1: une perspective d'éléments polyédriques adjacents sur socle, selon l'invention;

Figure 2: une coupe des deux types de faces de la partie supérieure d'un polyèdre selon la figure 1;

Figure 3: deux ensembles, prêts à la pose, d'un dispositif conforme à la figure 1; et:

Figure 4: une vue d'en haut, en projection sur un plan horizontal, d'une partie de l'ensemble de la figure 1 ou de la figure 3.

Dans l'exemple représenté sur ces figures, le dispositif est constitué par une série d'éléments modulaires polyédriques 1, 1', 1" disposés sur un socle 2, à distance égale ou variable les uns des autres. Chaque polyèdre revêt, dans sa partie inférieure, laforme d'un quadrilatère de type rectangulaire 3 prolongé vers le haut par une pyramide 4 dont les deux grandes faces 4' et les deux petites faces 4", opposées deux à deux, se rejoignent au sommet sur une pointe effilée 5.

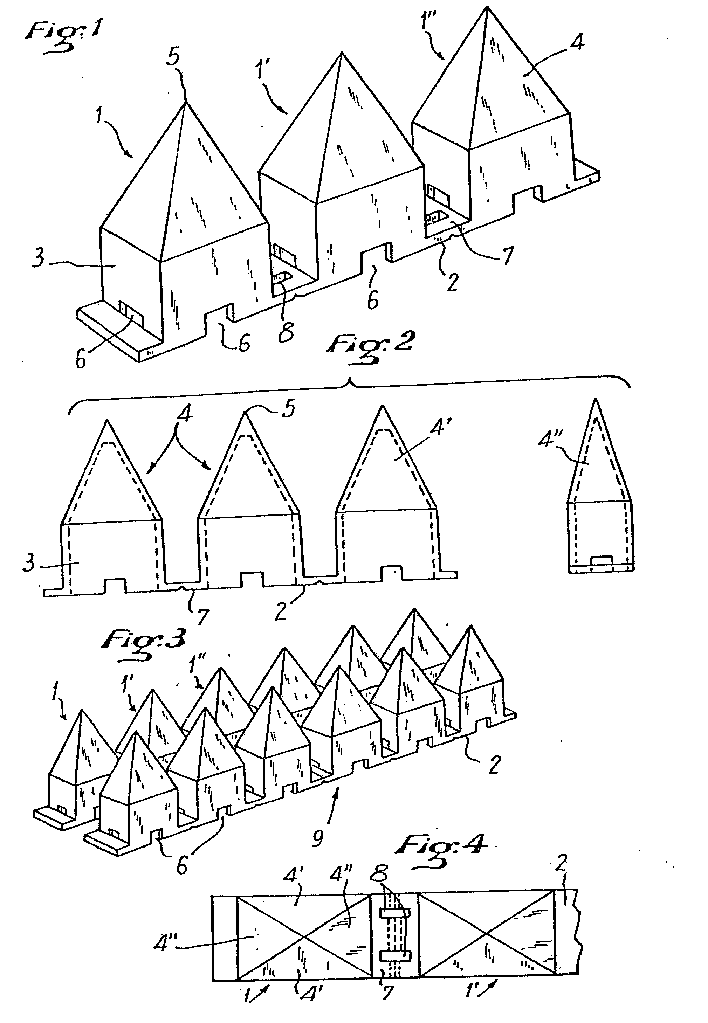

De préférence, comme indiqué sur les figures 1 et 3, au moins une face du polyèdre, à la base de celui-ci, est pourvue d'un évidement 6 pour assurer le désembuage de volume intérieur de chaque polyèdre lorsque celui-ci est creux.

Pour constituer un ensemble unitaire apte à être posé sur un toit, une corniche, fenêtre ou autre support, selon une ou plusieurs lignes (par exemple deux comme indiqué sur la figure 3), les polyèdres successifs sont adaptés au socle 2 qui peut être distinct ou faire partie intégrante desdits polyèdres 1, 1', 1". Dans l'exemple représenté, la base rectangulaire de chaque polyèdre sert de socle et deux polyèdres successifs sont reliés par des pontets 7, ici moulés dans la même matière que l'ensemble du dispositif. Ces pontets peuvent comporter des perforations 8 pour le cas où l'on désire fixer une barrette 9 d'éléments modulaires à l'aide de vis, clous, clips, liens d'attache ou moyens similaires.

Pour obtenir une bonne efficacité, tant dans l'effet de réflexion et/ou réfraction des rayons lumineux que pour empêcher la pose des pigeons ou analogues, il est recommander d'adopter, pour les arêtes des faces polyèdriques, des angles inférieurs à 90 degrés et de prévoir entre deux bases de polyèdres une distance inférieure à 3 centimètres.

Le matériau utilisé peut être de toute nature pourvu qu'il présente des faces aptes à dévier les rayons lumineux incidents, par exemple à la façon d'un prisme. On peut citer par exemple: verre, métal ou alliage, matière plastique transparente, semi-rigide ou rigide, comme du chlorure de polyvinyle, du polystyrène-choc ou équivalent. La matière plastique transparente est protégée contre les rayons UV. L'ensemble des polyèdres d'une série et du socle peuvent être moulés en une seule pièce unitaire pour réduire le coût de fabrication.

Bien entendu, l'invention n'est pas limitée à ce mode illustratif de réalisation et s'étend à de nombreux équivalents techniques. Par exemple, selon diverses variantes, on peut adopter d'autres types de volumes pour chaque polyèdre, par exemple cône, double pyramide, polygone à sommet triangulaire etc.; les polyèdres peuvent être pleins et non creux et être légèrement teintés etc. A l'évidence, on peut réaliser le dispositif en toutes dimensions et adopter un ou simultanément plusieurs systèmes de pose du socle, tel que: colle, vis, assemblage au support fixe par pince ou clips sur le pontet 7.

Des séries d'essais réalisés avec des prototypes du genre décrit dans l'exemple ci-dessus, dans différents secteurs urbains reconnus pour être particuliérement envahis par les pigeons, ont permis de constater des résultats immédiats et spectaculaires; dès la pose effectuée, celle-ci ayant d'ailleurs été rapide et facile, les pigeons ont déserté le secteur ainsi protégé en se réfugiant hors de la zone.

## Revendications

1. Dispositif destiné à éloigner et à empêcher les oiseaux, en particulier les pigeons, de se poser et de nicher sur les toits, corniches et autres des bâtiments, édifices, parties de constructions ou analogues, comprenant une série d'éléments sensiblement verticaux de forme allongée et de sommet pointu, disposés ou assemblés sur un socle, le dispositif étant caractérisé en ce que chaque élément est constitué par un polyédre (1, 1', 1") à faces latérales (4', 4") déviant la lumière et concourant en un sommet (5) sous forme de pointe effilée.

2. Dispositif selon la revendication 1, caractérisé en ce que le polyèdre (1, 1', 1"), creux ou plein, est du type choisi dans le groupe: cône, pyramide, polygone à sommet triangulaire, quadrilatère surmonté d'une pyramide.

3. Dispositif selon l'une quelconque des revendications 1 ou 2, caractérisé en ce que les faces latérales (4, 4") concourant au sommet (5) de chaque polyèdre font un angle inférieur à 90 degrés par rapport à l'horizontale et en ce que la distance entre les parties les plus proches de deux bases de polyèdres adjacents sur le socle est inférieure ou égale à 3 centimètres.

4. Dispositif selon l'une quelconque des revendications 1 à 3, caractérisé en ce que des évidements (6) sont prévus à la partie inférieure de chaque polyèdre.

5. Dispositif selon l'une quelconque des revendications 1 à 4, caractérisé en ce que le socle (2) prévu à la base des polyèdres (1, 1', 1") et qui constitue leur support de fixation sur la surface à protéger, fait partie intégrante de ladite base et se trouve muni, entre deux polyèdres successifs (1, 1'; 1', 1") de perforations (8) destinées au passage de moyens de fixation.

6. Dispositif selon l'une quelconque des revendications 1 à 5, caractérisé en ce que les polyèdres (1, 1', 1") et le socle (2) sont réalisés en matériaux divers choisis notamment dans le groupe: verre, métal ou alliage, matière plastique transparente, semi-rigide our rigide, protégée contre les rayons ultra-violets.

## Patentansprüche

1. Vorrichtung, die dazu bestimmt ist, die Vögel, insbesondere die Tauben abzuweisen und daran zu hindern, sich auf Dächern, Gesimsen und anderen Oberflächen von Gebäuden, Bauwerken, Konstruktionsteilen od.dgl. niederzulassen und zu nisten, bestehend aus einer Reihe von im wesentlichen vertikalen Elementen länglicher Form mit spitzem Oberteil, die auf einem Sockel angeordnet oder zusammengefaßt sind, dadurch gekennzeichnet, daß jedes Element aus einem Polyeder (1, 1', 1'') mit Seitenflächen (4', 4''), die das Licht ablenken und zu einem Oberteil (5) in Form einer scharfen Spitze zusammenlaufen, besteht.

2. Vorrichtung nach Anspruch 1, dadurch gekennzeichnet, daß der Polyeder (1, 1', 1''), der voll oder hohl ist, aus der Gruppe folgender Formen ausgewählt ist: Konus, Pyramide, Polygon mit dreieckiger Spitze, Quader mit aufgesetzter Pyramide.

3. Vorrichtung nach einem der Ansprüche 1 oder 2, dadurch gekennzeichnet, daß die Seitenflächen (4', 4''), die zu der Spitze (5) jedes Polyeders zusammenlaufen, einen Winkel unter 90° in bezug auf die Horizontale einschließen und daß der Abstand zwischen den einander am nächsten liegenden auf dem Sockel aufeinander folgenden Grundlinien der Polyeder weniger oder gleich 3 cm beträgt.

4. Vorrichtung nach einem der Ansprüche 1 bis 3, dadurch gekennzeichnet, daß Ausnehmungen (6) in dem unteren Teil jedes Polyeders vorgesehen sind.

5. Vorrichtung nach einem der Ansprüche 1 bis 4, dadurch gekennzeichnet, daß der Sockel (2), der an der Basis der Polyeder (1, 1', 1'') vorgesehen ist und deren Unterlage zur Befestigung an der zu schützenden Oberfläche darstellt, ein integrierender Bestandteil der gennannten Basis ist und zwischen zwei aufeinanderfolgenden Polyedern (1, 1', 1'') mit Perforierungen (8) ausgestattet ist, die zum Durchtritt von Befestigungsmitteln bestimmt sind.

6. Vorrichtung nach einem der Ansprüche 1 bis 5, dadurch gekennzeichnet, daß die Polyeder (1, 1', 1'') und der Sockel (2) aus verschiedenen Materialien, insbesondere solchen aus der Gruppe: Glas, Metall oder Metallegierung, transparentes, steifes oder halbsteifes Kunststoffmaterial, das gegen UV-Strahlen geschützt ist, hergestellt sind.

## Claims

1. Apparatus designed to keep birds away, in particular pigeons, and to keep them from settling and nesting on roofs, cornices, and other surfaces of structures, edifices, parts of buildings or analogous constructions, consisting of a series of generally vertical elements of elongated shape, with a pointed peak, arranged or assembled on a base. Each element of the apparatus is a polyhedron (1, 1', 1'') with side faces (4', 4'') shunting the light and coming together at a peak (5) in the form of a sharp point.

2. Apparatus according to claim 1, characterized in the sense that the hollow or solid polyhedron (1, 1', 1'') is of the type chosen from the following: cone, pyramid, polygon with triangular peak, quadrilateral surmounted by a pyramid.

3. Apparatus according to either claim 1 or 2, characterized in the sense that the side faces (4, 4'') coming to the peak (5) of each polyhedron, form an angle less than 90° off the horizontal, and the distance between the nearest parts of the two adjacent polyhedron bases on the apparatus base, is equal to or less than 3 centimeters.

4. Apparatus according to claims 1 through 3, characterized by recesses (6) at the lower part of each polyhedron.

5. Apparatus according to claims 1 through 4, characterized in the sense that the apparatus base (2), provided at the base of the polyhedrons (1, 1', 1'') and constituting their fastening support to the surface to be protected, is an integral part of the said polyhedron base and, between two successive polyhedrons (1, 1'; 1', 1'') contains holes (8) for the fasteners to go through.

6. Apparatus according to claims 1 through 5, characterized in the sense that the polyhedrons (1, 1', 1'') and the apparatus base (2) are made of various materials selected from the following: glass, metal or alloy, transparent plastic, rigid or semi-rigid, protected against ultra-violet rays.

Fig.1

Fig.2

Fig.3

Fig.4